# EUROPÄISCHE PATENTSCHRIFT

(11) **EP 2 855 793 B1**
(45) Veröffentlichungstag und Bekanntmachung des Hinweises auf die Patenterteilung: **27.04.2016**
(21) Anmeldenummer: 13726499.0
(22) Anmeldetag: 29.05.2013
(51) Int. Cl.: E04D 3/35

(54) **DACHEINDECKUNGSELEMENT**
ROOF COVERING ELEMENT
ÉLÉMENT DE COUVERTURE DE TOITURE

(30) Priorität: 31.05.2012 DE 102012104729
(43) Veröffentlichungstag der Anmeldung: 08.04.2015
(73) Patentinhaber: ThyssenKrupp Steel Europe AG, 47166 Duisburg (DE)
(72) Erfinder: KIEHL, Anna-Lena, 57250 Netphen (DE); KLAUKE, Peter, 58239 Schwerte (DE); LEWE, Tobias, 48145 Münster (DE); KLEINSCHMIDT, Oliver, 44137 Dortmund (DE)
(74) Vertreter: ThyssenKrupp Intellectual Property GmbH
(86) Internationale Anmeldenummer: PCT/EP2013/061101
(87) Internationale Veröffentlichungsnummer: WO 2013/178698

(56) Entgegenhaltungen:
- WO-A1-03/037619
- DE-U1- 29 803 111
- FR-A1- 2 436 222

## Beschreibung

Die Erfindung betrifft ein Dacheindeckungselement, bestehend aus einem sandwichartigen Materialverbund, der aus metallischen Deckblechen und mindestens einer zwischen den Deckblechen angeordneten Kernschicht aufgebaut ist.

Die Verwendung von korrosionsgeschützten oder korrosionsfesten Metallblechen zur Eindeckung von Gebäudedächern ist seit langem bekannt. Hierzu werden üblicherweise großflächige Metallbleche, die beispielsweise aus feuerverzinktem Stahlband in Form von Trapez- oder Wellprofilen hergestellt werden, auf Dachlatten und/oder Dachsparren einer Dachkonstruktion befestigt. Normale, d.h. einschichtige Metallbleche bieten jedoch keine zufriedenstellende Wärmeisolierung und auch keine zufriedenstellende Körperschalldämpfung.

Des Weiteren ist bekannt, metallische Dacheindeckungsplatten als Sandwichplatten auszuführen, um solchen Platten insbesondere verbesserte Wärmedämmeigenschaften zu geben. Hierzu wird ein sandwichartiger Materialverbund hergestellt, der sich aus metallischen Deckblechen und einer Kernschicht aus Schaumstoff zusammensetzt. Zur Herstellung eines solchen Materialverbundes werden die Deckbleche üblicherweise hinterschäumt.

Aus der DE 298 03 111 U1 ist ein körperschalldämmendes Bauelement zur Herstellung einer Dachhaut bekannt, das aus einem flächigen Metall-Kunststoff-Metallverbundwerkstoff besteht. Die Metallschichten dieses Verbundwerkstoffes bestehen aus korrosionsfesten Metallblechen oder sind mit mindestens einer korrosionsfesten Beschichtung versehen. Die zwischen den Metallschichten angeordnete Kunststoffschicht ist aus einem körperschalldämmenden, viskoelastischen Kunststoff gebildet. Die Kunststoffschicht besteht vorzugsweise aus einem thermoplastischen Kunststoff. Dieses bekannte Bauelement, das mehrere dachpfannenförmige Einprägungen aufweist und daher auch als "Metalldachpfanne" bezeichnet wird, besitzt zwar verbesserte Körperschalleigenschaften, nachteilig ist jedoch, dass es nur eine relativ geringe Temperaturbeständigkeit aufweist. Insbesondere bei Dächern, die mit Photovoltaik-Systemen ausgerüstet werden, besteht beispielsweise bei einer unsachgemäßen Montage und/oder Funktionsstörungen solcher Systeme, die Gefahr von Dachbränden. Da Wohnhäuser und auch Industriegebäude zunehmend mit Photovoltaik-Systemen ausgerüstet werden, nimmt die von einer unsachgemäßen Montage und/oder Funktionsstörungen solcher Systeme ausgehende Brandgefahr entsprechend zu. Um eine Entzündung der üblicherweise aus Holz hergestellten Dachkonstruktion zumindest für eine gewisse Zeit bzw. vollständig zu verhindern, ist es wünschenswert, dass aus Verbundmaterial hergestellte Dacheindeckungsmaterialien eine ausreichend hohe Temperaturbeständigkeit besitzen.

FR 2 436 222 A1 offenbart ein Dacheindeckungselement gemäß dem Oberbegriff des Anspruchs 1.

Davon ausgehend liegt der vorliegenden Erfindung die Aufgabe zugrunde, ein Bauelement der eingangs genannten Art zu schaffen, das eine ausreichend hohe Temperaturbeständigkeit aufweist, relativ leicht, stabil und langlebig ist, und sich relativ kostengünstig herstellen lässt.

Zur Lösung dieser Aufgabe wird ein Dacheindeckungselement mit den Merkmalen des Anspruchs 1 vorgeschlagen.

Das erfindungsgemäße Dacheindeckungselement, im Folgenden auch als Bauelement zur Herstellung einer Dachhaut bezeichnet, ist aus einem sandwichartigen Materialverbund gefertigt, der aus metallischen Deckblechen und mindestens einer zwischen den Deckblechen angeordneten Kernschicht aufgebaut ist. Die Kernschicht ist dabei aus einem faserhaltigen, bis mindestens 600°C temperaturbeständigen Isolationswerkstoff gebildet, wobei die Dicke der Kernschicht erfindungsgemäß bis zu 2,0 mm beträgt.

Neben der Temperaturbeständigkeit bei gleichzeitig guter Wärmeisolierung trägt die faserhaltige, bis mindestens 600°C, vorzugsweise bis mindestens 700°C temperaturbeständige Kernschicht gegenüber einer konventionellen Kernschicht aus Schaumstoff oder Kunststoff, wie sie beispielsweise das Dacheindeckungselement gemäß der DE 298 03 111 U1 aufweist, auch zu höheren Steifigkeitseigenschaften des erfindungsgemäßen Bauelements bei. Dadurch können die Deckbleche des erfindungsgemäßen Bauelements relativ dünn ausgeführt werden, sodass gegenüber der konventionellen Ausführung zudem eine Reduzierung des Gewichts des Sandwichwerkstoffes bzw. des daraus gefertigten Bauelements möglich ist. Damit ermöglicht das erfindungsgemäße Bauelement auch eine wesentlich weniger aufwendige Dachkonstruktion, da das Gewicht des erfindungsgemäßen Bauelements nicht nur gegenüber bekannten Beton- oder Tondachpfannen, sondern auch gegenüber konventionellen Dachpfannen aus Metall-Kunststoff-Metallverbundwerkstoff erheblich verringert ist. Im Übrigen zeichnet sich das erfindungsgemäße Bauelement aufgrund der faserhaltigen, temperaturbeständigen Kernschicht auch durch eine gute Körperschalldämpfung aus. Neben der leichten Ausgestaltung des erfindungsgemäßen Bauelements, die insbesondere hinsichtlich des Transports und der Handhabung des Bauelements auf der Baustelle von Vorteil ist, lässt sich das erfindungsgemäße Bauelement auch unter anderem vor Ort, insbesondere auf der Baustelle gut weiterverarbeiten, beispielsweise beschneiden. Das erfindungsgemäße Bauelement lässt sich dadurch schnell und flexibel an die jeweiligen Gegebenheiten vor Ort anpassen.

Das erfindungsgemäße Bauelement (Dacheindeckungselement) erfüllt zumindest die Brandschutzklasse A2, mitunter sogar die Brandschutzklasse A1 nach DIN 4102, wenn es besonders bevorzugt eine nicht brennbare, faserhaltige Kernschicht aufweist.

Die Dicke des jeweiligen Deckblechs des erfindungsgemäßen Bauelements liegt beispielsweise im Bereich von ca. 0,1 mm bis 0,8 mm, vorzugsweise im Bereich von ca. 0,1 mm bis 0,5 mm, und besonders bevorzugt im Bereich von ca. 0,1 mm bis 0,4 mm.

Die Deckbleche des erfindungsgemäßen Bauelements sind vorzugsweise aus Stahlwerkstoff gefertigt. Stahlwerkstoff ist ein relativ kostengünstiger Werkstoff, der sich durch eine hohe Temperaturbeständigkeit, eine hohe Bruchfestigkeit und eine gute Umformbarkeit, insbesondere ein günstiges Tiefziehverhalten und/oder Prägeverhalten auszeichnet.

Um günstige Materialkosten und zugleich eine hohe Lebensdauer des erfindungsgemäßen Bauelements zu erzielen, sieht eine weitere Ausgestaltung der Erfindung vor, dass die Deckbleche mit einer Korrosionsschutzschicht versehen sind. Die Korrosionsschutzschicht wird beispielsweise durch Feuerveredelung und/oder elektrolytische Beschichtung der metallischen Deckbleche realisiert. Charakteristische Überzüge für die Feuerveredelung sind: Z: 99% Zn, ZA: 95% Zn + 5% Al; AZ: 5% Al + 43,4% Zn + 1,6% Si; AS: 88-92% Al + 8-12% Si.

Eine weitere vorteilhafte Ausgestaltung des erfindungsgemäßen Bauelements ist dadurch gekennzeichnet, dass die Deckbleche unterschiedlich dick und/oder mit unterschiedlichen Korrosionsschutzschichten versehen sind. Hierdurch lässt sich ein hinsichtlich hoher Biegesteifigkeit, geringem Bauteilgewicht und hoher Witterungsbeständigkeit optimales Dacheindeckungselement erzielen.

In einer weiteren Ausgestaltung des erfindungsgemäßen Bauelements ist mindestens eines der Deckbleche mit einer aus Zink gebildeten Korrosionsschutzschicht versehen. Alternativ oder zusätzlich kann auch mindestens eines der Deckbleche mit einer aus Aluminium gebildeten Korrosionsschutzschicht versehen sein.

Weitere in diesem Zusammenhang geeignete Beschichtungsverfahren, neben dem Feuerbeschichten und auch dem elektrolytischen Beschichten, sind CVD-, PVD- und/oder Sol-Gel-Beschichtungsverfahren. Ferner können die Deckbleche auch weiterveredelt werden, beispielsweise anodisiert werden, bzw. solche Deckbleche zur Herstellung des erfindungsgemäßen Bauelements verwendet werden.

Vorteilhaft ist insbesondere, wenn gemäß einer weiteren Ausgestaltung des erfindungsgemäßen Bauelements zumindest die Außenseite des oberen und/oder der Sonnenseite zugewandten Deckblechs mit einer aus Aluminium gebildeten Korrosionsschutzschicht versehen ist. Denn eine solche Aluminiumbeschichtung verleiht dem erfindungsgemäßen Bauelement ein sehr geringes Absorptionsverhalten für Sonnen- bzw. Temperaturstrahlung bzw. ein hohes Wärmereflexionsvermögen.

Gemäß einer weiteren Ausgestaltung des erfindungsgemäßen Bauelements ist zumindest die Außenseite des oberen und/oder der Sonnenseite zugewandten Deckblechs zusätzlich mit einer organischen Beschichtung versehen. Organische Beschichtungen in Form von Lacken können unterschiedliche Farben aufweisen, sodass der Farbgestaltung des erfindungsgemäßen Bauelements keine Grenzen gesetzt sind.

Zur Erzielung einer ausreichend hohen Temperaturbeständigkeit weist die Kernschicht bzw. der Isolationswerkstoff der Kernschicht des erfindungsgemäßen Bauelements in weiterer Ausgestaltung der Erfindung eine Dicke im Bereich von ca. 0,6 mm bis 1,5 mm, und besonders bevorzugt im Bereich von ca. 0,7 mm bis 1,3 mm auf.

Ferner ist es hinsichtlich eines geringen Bauteilgewichts von Vorteil, wenn gemäß einer weiteren Ausgestaltung der Erfindung die Dicke der Kernschicht mindestens das 1,5-fache, vorzugsweise mindestens das 2-fache, besonders bevorzugt mindestens das 2,5-fache der Dicke eines der Deckbleche oder des dünnsten der Deckbleche beträgt.

Eine weitere vorteilhafte Ausgestaltung des erfindungsgemäßen Bauelements ist dadurch gekennzeichnet, dass der Isolationswerkstoff der Kernschicht aus anorganischen Fasern, vorzugsweise Mineralfasern, und anorganischen Füllstoffen, vorzugsweise mineralischen Füllstoffen, in Kombination mit organischen Fasern und Bindemittel hergestellt ist. Versuche haben gezeigt, dass ein solcher Isolationswerkstoff Dauereinsatztemperaturen von bis zu 1.000°C ermöglicht.

Der Isolationswerkstoff bzw. die Kernschicht des erfindungsgemäßen Bauelements enthält vorzugsweise ein mineralisches Brandschutzmittel, welches halogenfrei ist und als Rauchgasunterdrückungsmittel wirkt. Ferner kann der Isolationswerkstoff bzw. die Kernschicht vorzugsweise ein Fungizid enthalten, das eine Schimmelbildung in der Kernschicht unterdrückt.

Zur Verbindung der Lagen des sandwichartigen Materialverbundes sieht eine weitere Ausgestaltung des erfindungsgemäßen Bauelements vor, dass das jeweilige Deckblech über eine Klebstoffschicht mit der Kernschicht verbunden ist. Als Klebstoff kommt dabei vorzugsweise ein Klebstoff auf wässriger Basis, beispielsweise ein Polyurethandispersionsklebstoff oder Heißsiegelklebstoff zum Einsatz. Die Schichtdicke der jeweiligen Klebstoffschicht liegt dabei beispielsweise im Bereich von 5 µm bis 25 µm, vorzugsweise im Bereich von 8 µm bis 15 µm. Das Auftragen des Klebstoffs auf das Deckblech erfolgt beispielsweise durch Rakeln, Aufsprühen oder Beschichten mittels Auftragswalze. Die Decklagen (Deckbleche) sowie der für die Kernschicht verwendete faserhaltige, temperaturbeständige Isolationswerkstoff können bandförmig oder tafelförmig miteinander verbunden werden.

Vorzugsweise erfolgt die Verbindung der Decklagen mit der Kernschicht mittels einer Doppelbandpresse. Der auf das Deckblech aufgetragene Klebstoff (Heißsiegelklebstoff) wird in der Doppelbandpresse durch Druck und Temperatur aktiviert und vernetzt mit der faserhaltigen, temperaturbeständigen Kernschicht.

Alternativ kann bereits bei der Herstellung des Isolationswerkstoffes bzw. der Kernschicht ein Klebstoff auf wässriger Basis in den faserhaltigen, temperaturbeständigen Isolationswerkstoff eingebracht, insbesondere infiltriert oder beigemischt werden. Dadurch kann der Schritt des Klebstoffauftrags auf den Deckblechen entfallen. Die Verbindung der Decklagen mit der Kernschicht erfolgt, wie bereits oben beschrieben, vorzugsweise in einer Doppelbandpresse, in der durch Druck und Temperatur zunächst der Klebstoff innerhalb der Kernschicht aktiviert und vernetzt wird und gleichzeitig oder anschließend an den Decklagen stoffschlüssig anhaftet.

Der erfindungsgemäße sandwichartige Materialverbund ist formbar, insbesondere tiefziehfähig und/oder prägefähig, sodass beliebige Formgestaltungen von einer im Wesentlichen flachen Platte bis zu dreidimensionalen Strukturen in unterschiedlichen Abmessungen herstellbar sind. Insbesondere kann das erfindungsgemäße Bauelement als Dachpfanne, Schindel, wellenförmiges Profil oder Trapezprofil ausgebildet sein.

Weitere bevorzugte und vorteilhafte Ausgestaltungen des erfindungsgemäßen Bauelements sind in den Unteransprüchen angegeben.

Nachfolgend wird die Erfindung anhand einer mehrere Ausführungsbeispiele darstellenden Zeichnung näher erläutert. Es zeigen:
- Fig. 1: einen Abschnitt eines erfindungsgemäßen sandwichartigen Materialverbundes in einer Schnittansicht;
- Fig. 2a: ein eine dachpfannenförmige Struktur aufweisendes Bauelement zur Herstellung einer Dachhaut, in einer Seitenansicht;
- Fig. 2b: das Bauelement der Fig. 2a in Draufsicht;
- Fig. 2c: mehrere überlappend angeordnete Bauelemente gemäß Fig. 2a in perspektivischer Darstellung;
- Fig. 3: ein weiteres Bauelement zur Herstellung einer Dachhaut mit dachpfannenförmiger Struktur, in einer Seitenansicht; und
- Fig. 4: einen Abschnitt eines Gebäudes, dessen Dach mit einem Photovoltaiksystem versehen ist, in einer Giebel- bzw. Seitenansicht.

Die in der Zeichnung dargestellten Bauelemente (Dacheindeckungselemente) 1, 1' sind aus einem sandwichartigen Materialverbund 2 gebildet. Der Materialverbund 2 ist aus zwei metallischen Decklagen 2.1, 2.2 und einer faserhaltigen, bis mindestens 600°C temperaturbeständigen Kernschicht 2.3 aufgebaut.

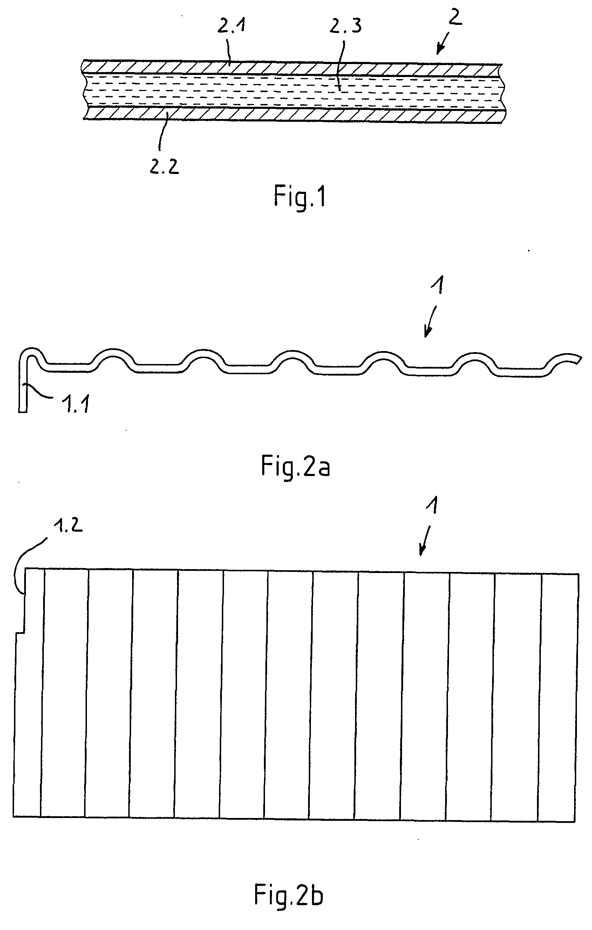

Die Decklagen 2.1, 2.2 bestehen beispielsweise aus Stahlblech, das vorzugsweise mit einer Korrosionsschutzschicht versehen ist. Bevorzugt werden dabei auf Zink oder Aluminium basierende Korrosionsschutzschichten verwendet. Die Dicke der jeweiligen Decklage (Deckblech) 2.1, 2.2 beträgt beispielsweise ca. 0,1 bis 0,8 mm, vorzugsweise maximal 0,5 mm, besonders bevorzugt maximal 0,4 mm. In dem in Fig. 1 gezeigten Ausführungsbeispiel haben beide Deckbleche 2.1, 2.2 im Wesentlichen die gleiche Dicke, z.B. ca. 0,3 mm, und besitzen die gleiche Werkstoffgüte. Es können aber auch Deckbleche 2.1, 2.2 unterschiedlicher Dicke und/oder Werkstoffgüte zur Herstellung des Materialverbundes 2 verwendet werden. Insbesondere können die Deckbleche 2.1, 2.2 mit unterschiedlichen Korrosionsschutzschichten versehen sein. So kann beispielsweise das Deckblech 2.1 oder 2.2, das nach der Eindeckung des betreffenden Daches der Sonnenseite zugewandt ist, mit einer Aluminiumbasierten Beschichtung versehen sein, die ein hohes Wärmereflexionsvermögen besitzt.

Die Kernschicht 2.3 besteht aus einem faserhaltigen, bis mindestens 600°C, vorzugsweise bis mindestens 700°C temperaturbeständigen Isolationswerkstoff mit einer Dicke von ca. 0,5 bis 2,0 mm, vorzugsweise ca. 0,6 bis 1,5 mm, und besonders bevorzugt im Bereich von ca. 0,7 bis 1,3 mm.

Der Werkstoff der Kernschicht 2.3 besteht aus einer Mischung aus anorganischen Fasern, vorzugsweise Mineralfasern, und anorganischem Füllstoff, vorzugsweise mineralischen Füllstoffen, mit einem geringen Anteil organischer Fasern und Bindemittel. Bei den anorganischen Fasern, die zusammen mit dem anorganischen Füllstoff den Hauptbestandteil des Kernschichtwerkstoffes ausmachen, handelt es sich vorzugsweise um biolösliche Mineralfasern. Außerdem kann der Kernschichtwerkstoff ein mineralisches, halogenfreies Brandschutzmittel enthalten, welches eine hohe Rauchgasunterdrückungswirkung aufweist. Da der Anteil an organischen Fasern und organischem Bindemittel in der Kernschicht 2.3 sehr gering ist, ergibt sich bei einer Feuer- bzw. Hitzeeinwirkung lediglich eine niedrige Rauchgasentwicklung.

Die anorganischen Fasern und mineralischen Füllstoffe der Kernschicht 2.3 ermöglichen, dass eine solche Isolationswerkstoffschicht Dauereinsatztemperaturen bis 900°C oder sogar bis 1.000°C standhält, vorzugsweise nicht brennbar ist. Zudem bietet die so ausgeführte Kernschicht 2.3 eine gute Wärmeisolierung sowie eine gute Schalldämpfung.

Die faserhaltige Kernschicht 2.3 verleiht dem erfindungsgemäßen sandwichartigen Dacheindeckungselement 1, 1' neben der hohen Temperaturbeständigkeit bei zugleich guter Wärmeisolierung auch deutlich höhere Steifigkeitseigenschaften im Vergleich zu einer konventionellen Kernschicht aus Kunststoff, wie sie beispielsweise die aus Metall-Kunststoff-Metallverbundwerkstoff bestehende Dachpfanne gemäß der DE 298 03 111 U1 aufweist. Diese höheren Steifigkeitseigenschaften ermöglichen die Verwendung relativ dünner metallischer Decklagen 2.1, 2.2 und somit eine Reduzierung des Gewichts des sandwichartigen Dacheindeckungselements 1, 1'.

In Fig. 1 ist deutlich zu erkennen, dass jedes der Deckbleche 2.1, 2.2 des Materialverbundes 2 erheblich dünner ausgebildet ist als die Kernschicht 2.3. Zur Erzielung eines leichtgewichtigen Dacheindeckungselements beträgt die Dicke der Kernschicht 2.3 mindestens das 1,5-fache, vorzugsweise mindestens das 2-fache, und besonders bevorzugt mindestens das 2,5-fache der Dicke des dünnsten der beiden Deckbleche 2.1, 2.2.

Die Deckbleche 2.1, 2.2 werden durch Kleben mit der Kernschicht verbunden. Hierzu wird beispielsweise eine Seite des jeweiligen Deckblechs 2.1, 2.2, nämlich die der Kernschicht 2.3 zugewandte Seite, mit Klebstoff beschichtet. Bei dem Klebstoff handelt es sich vorzugsweise um einen Klebstoff auf wässriger Basis, beispielsweise Polyurethandispersionsklebstoff. Für eine ausreichende Verbindung von Deckblech 2.1, 2.2 und Kernschicht 2.3 wird der Klebstoff beispielsweise mit einer Schichtdicke zwischen 5 bis 25 µm, vorzugsweise zwischen 8 bis 15 µm auf das Deckblech 2.1, 2.2 aufgetragen. Das Auftragen des Klebstoffs kann beispielsweise durch Aufsprühen, Rakeln oder mittels Auftragswalzen erfolgen. Die Verbindung von Deckblechen 2.1, 2.2 und Kernschicht 2.3 erfolgt dann vorzugsweise mittels einer beheizten Doppelbandpresse (nicht gezeigt), in der durch Druck und Temperatur der Klebstoff aktiviert und mit der faserhaltigen, temperaturbeständigen Kernschicht 2.3 vernetzt wird.

Vorzugsweise ist die Kernschicht 2.3 in dem Materialverbund 2 durch den Klebstoff und/oder die Deckbleche 2.1, 2.2 gegen das Eindringen von Feuchtigkeit gekapselt.

Das erfindungsgemäße Verbundmaterial 2 lässt sich gut plastisch umformen, insbesondere durch Tiefziehen und/oder Prägen. Hierzu werden beispielsweise von einem entsprechenden bandförmigen Verbundmaterial 2 Platinen abgeschnitten und in einer Formpresse (nicht gezeigt) zu dreidimensionalen Dacheindeckungselementen 1, 1' umgeformt. Die Dacheindeckungselemente 1, 1' können dabei in nahezu beliebigen Formen bzw. Profilen und in unterschiedlichen Abmessungen hergestellt werden.

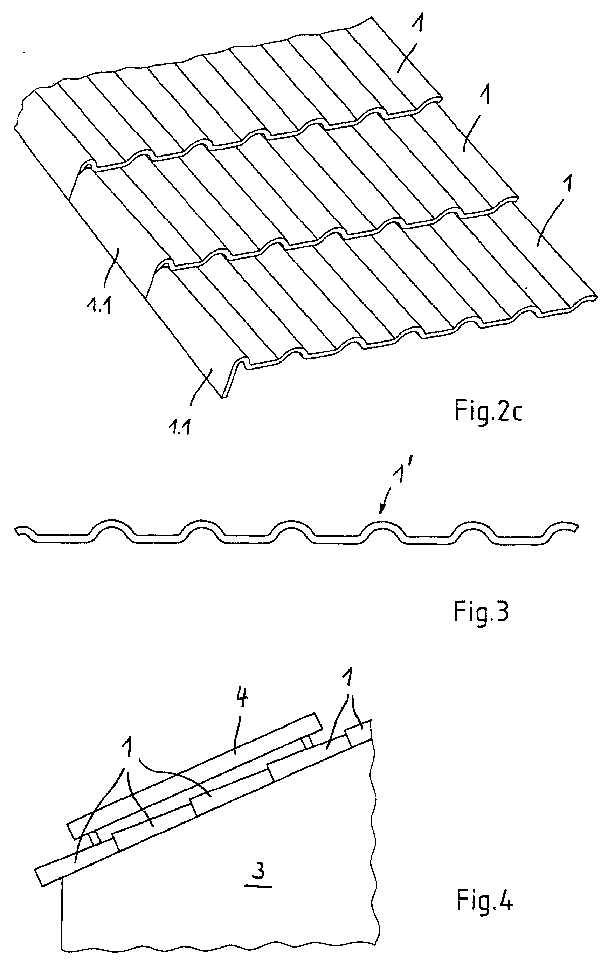

Wie in den Figuren 2a bis 2c und 3 gezeigt, kann das erfindungsgemäße Bauelement 1, 1' beispielsweise eine wellenförmige Form, insbesondere die Form von Dachpfannen aufweisen. Das jeweilige erfindungsgemäße Bauelement 1, 1' ist dabei vorzugsweise erheblich größer als eine "normale" Dachpfanne, die aus Beton oder gebranntem Tonwerkstoff besteht. Die Abmessungen des erfindungsgemäßen Bauelements 1, 1' können beispielsweise der Länge von 3 bis 10 nebeneinander und/oder übereinander angeordneten "normalen" Beton- oder Tondachpfannen betragen. Die Abmessungen eines erfindungsgemäßen Bauelements 1, 1' können somit beispielsweise in der Größenordnung von 1 m x 2 m liegen.

Ferner kann das erfindungsgemäße Bauelement 1 mindestens eine Abkantung 1.1 aufweisen. Die Abkantung kann dabei so angeordnet sein, dass das Bauelement 1 oder 1' damit an einer im Wesentlichen horizontal verlaufenden Dachlatte formschlüssig angehängt werden kann. Alternativ oder zusätzlich kann das erfindungsgemäße Bauelement 1, 1' auch eine in Dachneigung verlaufende Abkantung 1.1 aufweisen, so dass mit dem Bauelement 1 der sogenannte Ortgang, d.h. der seitliche Abschluss der Dachfläche an einem senkrecht stehenden Giebel hergestellt werden kann (vgl. Figuren 2a und 2c). Dabei ist an der Abkantung 1.1 vorzugsweise eine Einprägung und/oder Aussparung 1.2 vorgesehen, um an dem Ortgang eine möglichst flächenbündige Kantenfläche zu erzielen.

In Fig. 4 ist ein mit erfindungsgemäßen Bauelementen 1 eingedecktes Gebäudedach, beispielsweise das Dach eines Industriegebäudes 3 skizziert, wobei auf der Dachhaut ein Photovoltaiksystem 4 montiert ist.

Die Ausführung der Erfindung ist nicht auf die in der Zeichnung dargestellten Ausführungsbeispiele beschränkt. Vielmehr sind zahlreiche Varianten des erfindungsgemäßen Bauelements (Dacheindeckungselements) 1, 1' denkbar, die auch bei Ausgestaltungen, die von den dargestellten Ausführungsbeispielen abweichen, von der in den beiliegenden Ansprüchen angegebenen Erfindung Gebrauch machen.

## Patentansprüche

1. Dacheindeckungselement (1, 1'), bestehend aus einem sandwichartigen Materialverbund, der aus metallischen Deckblechen (2.1, 2.2) und mindestens einer zwischen den Deckblechen angeordneten Kernschicht (2.3) aufgebaut ist, wobei die Kernschicht (2.3) aus einem faserhaltigen, bis mindestens 600°C temperaturbeständigen Isolationswerkstoff gebildet ist, **dadurch gekennzeichnet, dass** die Dicke der Kernschicht (2.3) bis zu 2,0 mm beträgt.

2. Dacheindeckungselement nach Anspruch 1, **dadurch gekennzeichnet, dass** die Dicke der Kernschicht (2.3) mindestens das 1,5-fache, vorzugsweise mindestens das 2-fache, besonders bevorzugt mindestens das 2,5-fache der Dicke eines der Deckbleche (2.1, 2.2) oder des dünnsten der Deckbleche (2.1, 2.2) beträgt.

3. Dacheindeckungselement nach Anspruch 1 oder 2, **dadurch gekennzeichnet, dass** der Isolationswerkstoff der Kernschicht (2.3) eine Dicke im Bereich von 0,6 mm bis 1,5 mm, besonders bevorzugt im Bereich von 0,7 mm bis 1,3 mm aufweist.

4. Dacheindeckungselement nach einem der Ansprüche 1 bis 3, **dadurch gekennzeichnet, dass** der Isolationswerkstoff der Kernschicht (2.3) aus anorganischen Fasern, vorzugsweise Mineralfasern, und anorganischen Füllstoffen, vorzugsweise mineralischen Füllstoffen, in Kombination mit organischen Fasern und Bindemittel hergestellt ist.

5. Dacheindeckungselement nach einem der Ansprüche 1 bis 4, **dadurch gekennzeichnet, dass** die Deckbleche (2.1, 2.2) aus Stahlwerkstoff gefertigt sind.

6. Dacheindeckungselement nach einem der Ansprüche 1 bis 5, **dadurch gekennzeichnet, dass** die Deckbleche (2.1, 2.2) mit einer Korrosionsschutzschicht versehen sind.

7. Dacheindeckungselement nach einem der Ansprüche 1 bis 6, **dadurch gekennzeichnet, dass** das jeweilige Deckblech (2.1, 2.2) eine Dicke im Bereich von 0,1 mm bis 0,8 mm, vorzugsweise im Bereich von 0,1 mm bis 0,5 mm, besonders bevorzugt im Bereich von 0,1 mm bis 0,4 mm aufweist.

8. Dacheindeckungselement nach einem der Ansprüche 1 bis 7, **dadurch gekennzeichnet, dass** die Deckbleche (2.1, 2.2) unterschiedlich dick sind und/oder mit unterschiedlichen Korrosionsschutzschichten versehen sind.

9. Dacheindeckungselement nach einem der Ansprüche 6 bis 8, **dadurch gekennzeichnet, dass** mindestens eines der Deckbleche (2.1, 2.2) mit einer aus Zink gebildeten Korrosionsschutzschicht versehen ist.

10. Dacheindeckungselement nach einem der Ansprüche 6 bis 9, **dadurch gekennzeichnet, dass** mindestens eines der Deckbleche (2.1, 2.2) mit einer aus Aluminium gebildeten Korrosionsschutzschicht versehen ist.

11. Dacheindeckungselement nach einem der Ansprüche 6 bis 10, **dadurch gekennzeichnet, dass** zumindest die Außenseite des oberen und/oder der Sonnenseite zugewandten Deckblechs mit einer aus Aluminium gebildeten Korrosionsschutzschicht versehen ist.

12. Dacheindeckungselement nach einem der Ansprüche 1 bis 11, **dadurch gekennzeichnet, dass** das jeweilige Deckblech (2.1, 2.2) über eine Klebstoffschicht mit der Kernschicht (2.3) verbunden ist.

13. Dacheindeckungselement nach Anspruch 12, **dadurch gekennzeichnet, dass** die jeweilige Klebstoffschicht aus Klebstoff auf wässriger Basis, vorzugsweise aus Polyurethandispersionsklebstoff gebildet ist.

14. Dacheindeckungselement nach Anspruch 12 oder 13, **dadurch gekennzeichnet, dass** die jeweilige Klebstoffschicht eine Schichtdicke im Bereich von 5 µm bis 25 µm, vorzugsweise im Bereich von 8 µm bis 15 µm aufweist.

15. Dacheindeckungselement nach einem der Ansprüche 1 bis 14, **dadurch gekennzeichnet, dass** es eine dreidimensionale Form, vorzugsweise eine wellenfömige Form oder ein Trapezprofil aufweist, oder als Dachpfanne oder Schindel ausgebildet ist.

16. Dacheindeckungselement nach einem der Ansprüche 1 bis 15, **dadurch gekennzeichnet, dass** es mindestens eine Abkantung (1.1) aufweist.

## Claims

1. Roofing element (1, 1'), consisting of a sandwich-like material composite, which is made up of metallic outer sheets (2.1, 2.2) and at least one core layer (2.3) arranged between the outer sheets, wherein the core layer (2.3) is formed from a fibre-containing insulating material that is temperature-resistant up to at least 600°C, **characterized in that** the thickness of the core layer (2.3) is up to 2.0 mm.

2. Roofing element according to Claim 1, **characterized in that** the thickness of the core layer (2.3) is at least 1.5 times, preferably at least 2 times, particularly preferably at least 2.5 times, the thickness of one of the outer sheets (2.1, 2.2) or of the thinnest of the outer sheets (2.1, 2.2).

3. Roofing element according to Claim 1 or 2, **characterized in that** the insulating material of the core layer (2.3) has a thickness in the range from 0.6 mm to 1.5 mm, particularly preferably in the range from 0.7 mm to 1.3 mm.

4. Roofing element according to one of Claims 1 to 3, **characterized in that** the insulating material of the core layer (2.3) is produced from inorganic fibres, preferably mineral fibres, and inorganic fillers, preferably mineral fillers, in combination with organic fibres and a binder.

5. Roofing element according to one of Claims 1 to 4, **characterized in that** the outer sheets (2.1, 2.2) are produced from steel material.

6. Roofing element according to one of Claims 1 to 5, **characterized in that** the outer sheets (2.1, 2.2) are provided with a corrosion protection layer.

7. Roofing element according to one of Claims 1 to 6, **characterized in that** the respective outer sheet (2.1, 2.2) has a thickness in the range from 0.1 mm to 0.8 mm, preferably in the range from 0.1 mm to 0.5 mm, particularly preferably in the range from 0.1 mm to 0.4 mm.

8. Roofing element according to one of Claims 1 to 7, **characterized in that** the outer sheets (2.1, 2.2) are of different thicknesses and/or are provided with different corrosion protection layers.

9. Roofing element according to one of Claims 6 to 8, **characterized in that** at least one of the outer sheets (2.1, 2.2) is provided with a corrosion protection layer formed from zinc.

10. Roofing element according to one of Claims 6 to 9, **characterized in that** at least one of the outer sheets (2.1, 2.2) is provided with a corrosion protection layer formed from aluminum.

11. Roofing element according to one of Claims 6 to 10, **characterized in that** at least the outer side of the upper outer sheet and/or the outer sheet facing the sun, is provided with a corrosion protection layer formed from aluminum.

12. Roofing element according to one of Claims 1 to 11, **characterized in that** the respective outer sheet (2.1, 2.2) is connected to the core layer (2.3) by way of a layer of adhesive.

13. Roofing element according to Claim 12, **characterized in that** the respective layer of adhesive is formed from a water-based adhesive, preferably from polyurethane dispersion adhesive.

14. Roofing element according to Claim 12 or 13, **characterized in that** the respective layer of adhesive has a layer thickness in the range from 5 µm to 25 µm, preferably in the range from 8 µm to 15 µm.

15. Roofing element according to one of Claims 1 to 14, **characterized in that** it has a three-dimensional form, preferably a corrugated form or a trapezoidal profile, or is formed as a roof tile or a shingle.

16. Roofing element according to one of Claims 1 to 15, **characterized in that** it has at least one fold (1.1).

## Revendications

1. Elément de couverture de toiture (1, 1'), constitué d'un assemblage de matériaux de type en sandwich qui est construit à partir de tôles de recouvrement métalliques (2.1, 2.2) et d'au moins une couche de noyau (2.3) disposée entre les tôles de recouvrement, la couche de noyau (2.3) étant formée d'un matériau d'isolation contenant des fibres et résistant à des températures jusqu'à au moins 600° C, **caractérisé en ce que** l'épaisseur de la couche de noyau (2.3) va jusqu'à 2,0 mm.

2. Élément de couverture de toiture selon la revendication 1, **caractérisé en ce que** l'épaisseur de la couche de noyau (2.3) vaut au moins 1,5 fois, de préférence au moins 2 fois, particulièrement préférablement au moins 2,5 fois l'épaisseur d'une tôle de recouvrement (2.1, 2.2) ou de la plus mince des tôles de recouvrement (2.1, 2.2).

3. Élément de couverture de toiture selon la revendication 1 ou 2, **caractérisé en ce que** le matériau d'isolation de la couche de noyau (2.3) présente une épaisseur de l'ordre de 0,6 mm à 1,5 mm, particulièrement préférablement de l'ordre de 0,7 mm à 1,3 mm.

4. Élément de couverture de toiture selon l'une quelconque des revendications 1 à 3, **caractérisé en ce que** le matériau d'isolation de la couche de noyau (2.3) est constitué de fibres inorganiques, de préférence de fibres minérales, et de charges inorganiques, de préférence de charges minérales, en combinaison avec des fibres organiques et des liants.

5. Élément de couverture de toiture selon l'une quelconque des revendications 1 à 4, **caractérisé en ce que** les tôles de recouvrement (2.1, 2.2) sont fabriquées en matériau en acier.

6. Élément de couverture de toiture selon l'une quelconque des revendications 1 à 5, **caractérisé en ce que** les tôles de recouvrement (2.1, 2.2) sont pourvues d'une couche de protection contre la corrosion.

7. Élément de couverture de toiture selon l'une quelconque des revendications 1 à 6, **caractérisé en ce que** la tôle de recouvrement respective (2.1, 2.2) présente une épaisseur de l'ordre de 0,1 mm à 0,8 mm, de préférence de l'ordre de 0,1 mm à 0,5 mm, particulièrement préférablement de l'ordre de 0,1 mm à 0,4 mm.

8. Élément de couverture de toiture selon l'une quelconque des revendications 1 à 7, **caractérisé en ce que** les tôles de recouvrement (2.1, 2.2) présentent des épaisseurs différentes et/ou sont pourvues de couches de protection contre la corrosion différentes.

9. Élément de couverture de toiture selon l'une quelconque des revendications 6 à 8, **caractérisé en ce qu'**au moins l'une des tôles de recouvrement (2.1, 2.2) est pourvue d'une couche de protection contre la corrosion constituée de zinc.

10. Élément de couverture de toiture selon l'une quelconque des revendications 6 à 9, **caractérisé en ce qu'**au moins l'une des tôles de recouvrement (2.1, 2.2) est pourvue d'une couche de protection contre la corrosion constituée d'aluminium.

11. Élément de couverture de toiture selon l'une quelconque des revendications 6 à 10, **caractérisé en ce qu'**au moins le côté extérieur de la tôle de recouvrement supérieure et/ou tournée vers le côté ensoleillé est pourvue d'une couche de protection contre la corrosion constituée d'aluminium.

12. Élément de couverture de toiture selon l'une quelconque des revendications 1 à 11, **caractérisé en ce que** la tôle de recouvrement respective (2.1, 2.2) est connectée à la couche de noyau (2.3) par le biais d'une couche d'adhésif.

13. Élément de couverture de toiture selon la revendication 12, **caractérisé en ce que** la couche d'adhésif respective est formée d'adhésif à base aqueuse, de préférence d'adhésif à dispersion de polyuréthane.

14. Élément de couverture de toiture selon la revendication 12 ou 13, **caractérisé en ce que** la couche d'adhésif respective présente une épaisseur de couche de l'ordre de 5 µm à 25 µm, de préférence de l'ordre de 8 µm à 15 µm.

15. Élément de couverture de toiture selon l'une quelconque des revendications 1 à 14, **caractérisé en ce qu'**il présente une forme tridimensionnelle, de préférence une forme ondulée ou un profil trapézoïdal, ou est réalisé sous forme de tuile de toit ou de bardeau.

16. Élément de couverture de toiture selon l'une quelconque des revendications 1 à 15, **caractérisé en ce qu'**il présente au moins une partie coudée (1.1).
